# EUROPÄISCHE PATENTSCHRIFT

(11) **EP 1 116 382 B1**
(45) Veröffentlichungstag und Bekanntmachung des Hinweises auf die Patenterteilung: **12.06.2002**
(21) Anmeldenummer: 99955743.2
(22) Anmeldetag: 17.09.1999
(51) Int. Cl.: H04N 5/45

(54) **VERFAHREN UND SCHALTUNGSANORDNUNG ZUR BILD-IN-BILD-EINBLENDUNG**
METHOD AND CIRCUIT FOR IMAGE-IN-IMAGE OVERLAY
PROCEDE ET CIRCUIT POUR L'INCRUSTATION D'IMAGES

(30) Priorität: 23.09.1998 DE 19843660
(43) Veröffentlichungstag der Anmeldung: 18.07.2001
(73) Patentinhaber: Micronas Munich GmbH, 81541 München (DE)
(72) Erfinder: BRETT, Maik, D-81539 München (DE); MENDE, Manfred, D-82008 Unterhaching (DE)
(74) Vertreter: Patentanwälte Westphal, Mussgnug & Partner
(86) Internationale Anmeldenummer: DE9902994
(87) Internationale Veröffentlichungsnummer: WO0018115

(56) Entgegenhaltungen:
- US-A- 4 987 493
- US-A- 5 353 067
- US-A- 5 355 150

## Beschreibung

Die Erfindung bezieht sich auf ein Verfahren zur Bild-in-Bild-Einblendung gemäß dem Oberbegriff von Anspruch 1 sowie eine Schaltungsanordnung zur Bild-in-Bild-Einblendung gemäß dem Oberbegriff von Anspruch 9.

Bei einer derartigen Bild-in-Bild-Einblendung (PiP, picture in picture) wird ein kleineres Einfügebild (Kleinbild) in ein größeres Hauptbild eingeblendet. Das Einfügebild wird entsprechend der Verkleinerung dezimiert und in eine Speichereinrichtung fortlaufend eingelesen, wobei ältere gespeicherte Bilder überschrieben werden, und anschließend werden die Einfügebilder unter Synchronisation mit den Hauptbildern ausgelesen. Entsprechend ist im allgemeinen die Auslesegeschwindigkeit der Einfügebilder höher als die Schreibgeschwindigkeit. Dabei können das Hauptbild und das Einfügebild in bekannter Weise Halbbilder sein, die zur Darstellung eines Monitorbildes verwendet werden.

Die höhere Auslesegeschwindigkeit kann bei bestimmten Phasenlagen der Raster des Hauptbildes und des Kleinbildes unter anderem dazu führen, daß der Auslesezeiger den Schreibzeiger überholt und ein in der Speichereinrichtung abgespeichertes vorheriges Bild ausliest, sodaß mitten in einem dargestellten Kleinbild eine Naht auftritt und teilweise das vorangegangene Einfügebild ausgelesen wird. Stammen beide Einfügebilder aus unterschiedlichen Bewegungsphasen, ergibt sich ein störender Effekt, da bewegte Objekte, durch die die Naht verläuft, verzerrt dargestellt werden. Stimmen die Frequenzen der Bilder des Einfügekanals und Hauptkanals nur annähernd überein, ergibt sich ein langsames Wandern des Ortes der Störung, was als besonders unangenehm empfunden wird.

Die EP 0 739 130 A2 beschreibt ein Verfahren zur Beseitigung dieser Naht durch Speicherung zweier Halbbilder eines Kleinbilds, sodaß immer genau das Halbbild gelesen werden kann, das gerade nicht geschrieben wird und somit der Lese- den Schreibzeiger nicht überholen kann. Hierfür sind ein erster und ein zweiter Speicher vorgesehen, die jeweils ein Halbbild speichern. Nachteilhaft an diesem Verfahren ist jedoch, daß eine Speicherkapazität von zwei Einfügebildern bzw Halbbildern notwendig ist, was entsprechende Kosten verursacht.

Das Dokument US-A-4 987 493 offenbart ein Verfahren zur Bild-in-Bild-Einblendung, bei dem eine Folge von unter Vertikaldezimation dezimierten Einfügebildern in eine Speichereinrichtung eingeschrieben und anschließend ausgelesen wird, die Folge von ausgelesenen Einfügebildern in eine Folge von Hauptbildern eingeblendet wird und die Speichereinrichtung fortlaufend mit den Einfügebildern überschrieben wird, wobei die Speichereinrichtung aus einem Hauptspeicher, der ein ganzes Halbbild speichern kann, und zwei Nebenspeicher ("Crossover buffers"), die eine Kapazität von nur einer Zeile haben besteht. Beim Auslesen wird entschieden, ob das Einfügebild aus dem Hauptspeicher ausgelesen wird oder, im Fall wenn der Lesezeiger den Schreibzeiger überholen würde, entsprechende Zeilen aus den Nebenspeichern ausgelesen werden.

Das Dokument US-A-5 355 150 beschreibt eine Speichereinrichtung für Einfügebilder die vier Segmente aufweist. Jedes dieser Segmente ist zur Speicherung eines einzelnen Einfügebilds vorgesehen.

Der Erfindung liegt entsprechend die Aufgabe zugrunde, ein Verfahren und eine Schaltungsanordnung zur Bild-in-Bild-Einblendung zu schaffen, mit denen kostengünstig und mit relativ geringem apparativen Aufwand das Auftreten einer Naht im Einfügebild verhindert werden kann.

Diese Aufgabe wird durch ein Verfahren nach Anspruch 1 sowie eine Schaltungsanordnung nach Anspruch 9 gelöst. Die Unteransprüche beschreiben bevorzugte Weiterbildungen des erfindungsgemäßen Verfahrens und der erfindungsgemäßen Schaltungsanordnung.

Der Erfindung liegt der Gedanke zugrunde, daß es grundsätzlich nicht notwendig ist, zwei ganze Einfügebilder abzuspeichern, um ein Überholen des Schreibzeigers durch den Lesezeiger zu verhindern. Statt der Verwendung einer Speicherkapazität von zwei Einfügebildern wird eine kleinere Speichereinrichtung in eine geeignete Anzahl Segmente unterteilt, und durch eine geeignete Entscheidungsfindung wird festgelegt, ob das aktuell geschriebene oder das vorangegangene Einfügebild ausgelesen wird.
Somit wird erfindungsgemäß - anders als bei der Verwendung von zwei getrennten Speichersegmenten für das aktuell geschriebene und das vorangegangene Einfügebild - gegebenenfalls bereits das aktuell geschriebene Einfügebild ausgelesen, wenn sichergestellt ist, daß der Lesezeiger nicht den Schreibzeiger überholt.

Hierfür können insbesondere gleich große Speichersegmente in vorgegebener Reihenfolge zyklisch überschrieben werden, da hierdurch insbesondere auch eine gute Periodizität des Vorgangs gewährleistet werden kann. Durch die Dimensionierungen nach den Ansprüchen 3 bis 6 kann das erfindungsgemäße Verfahren auf vorteilhafte Weise erreicht werden, wobei insbesondere das Entscheidungskriterium nach Anspruch 6 gewählt werden kann.

Die Erfindung wird im folgenden anhand der beiliegenden Zeichnungen an einigen Ausführungsformen näher erläutert. Es zeigen:
Fig. 1 ein Blockdiagramm einer erfindungsgemäßen Schaltungsanordnung;
Fig. 2 eine Darstellung einer Speichereinrichtung gemäß einer ersten Ausführungsform der Erfindung;
Fig. 3 eine Darstellung einer Speichereinrichtung gemäß einer zweiten Ausführungsform der Erfindung.

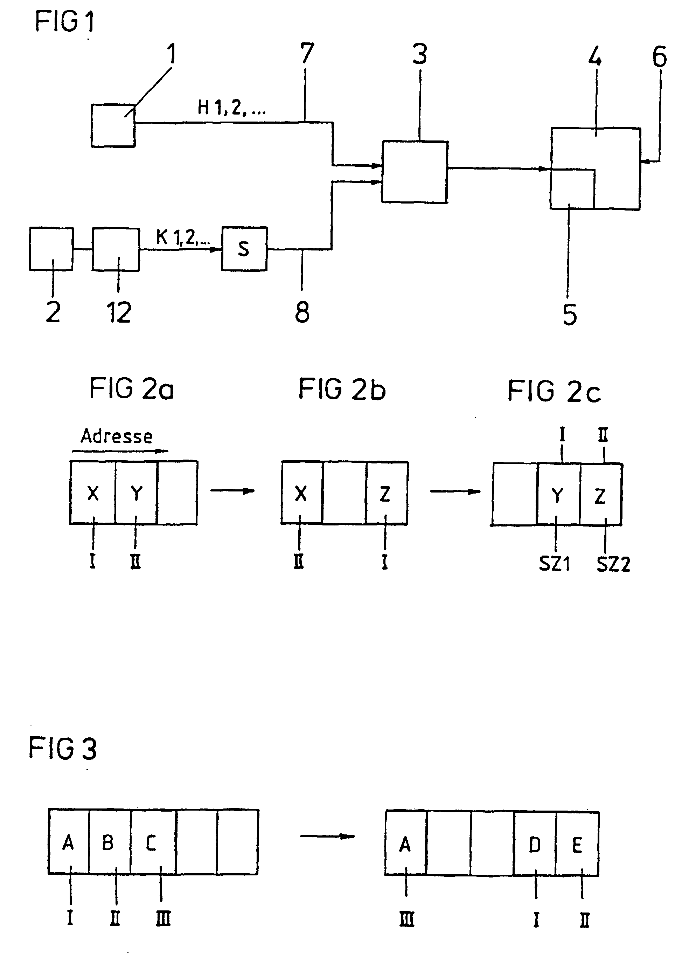

Aus einer Hauptbildquelle 1 wird gemäß Fig. 1 über einen Hauptbildkanal 7 eine Folge von Hauptbildern Hi= H1, H2, H3, ... zu einer Steuereinrichtung 3 ausgegeben. Von einer Einfügebildquelle 2 wird entsprechend eine Folge von durch eine Dezimationseinrichtung 12 dezimierten, dh. gegenüber den Hauptbildern verkleinerten, Einfügebildern Kj = K1, K2, K3,... zu einer Speichereinrichtung S ausgegeben und zwischengespeichert. Sowohl die Hauptbilder Hi als auch die Einfügbilder Kj sind dabei Halbbilder, die z.B. zeilenversetzt zu dem Gesamtmonitorbild zusammengesetzt werden. Anschließend wird die Folge von Kleinbildern ausgelesen und über einen Einfügebildkanal 8 an die Steuereinrichtung 3 weitergegeben. Werden eine asynchrone Hauptbildquelle 1 und Einfügebildquelle 2 verwendet, erfolgt der Auslesevorgang der Speichereinrichtung S unter Synchronisation mit den Hauptbildern Hi. Aufgrund der Dezimation, insbesondere der Vertikaldezimation erfolgt das Auslesen der Einfügebilder Kj aus der Speichereinrichtung durch die Steuereinrichtung 3 schneller als der Einschreibvorgang in die Speichereinrichtung. Die Steuereinrichtung 3 setzt aus den Hauptbildern Hi und Einfügebildern Kj ein Gesamtbild zusammen, das auf einem Monitor 6 wiedergegeben wird.

Im folgenden wird eine 1/ 4- Bild-in-Bild-Einblendung angenommen, bei der das Kleinbild entsprechend in der Horizontalen und Vertikalen jeweils um den Faktor 2 dezimiert wird. Erfindungsgemäß ist hierzu vorgesehen, daß die Speichereinrichtung eine Speicherkapazität von 1,5 (gegenüber den Hauptbildern dezimierten) Halbbildern aufweist und gemäß Fig. 2 in drei Speichersegmente X, Y und Z unterteilt ist, wobei alle drei Segmente gleich groß sind, d.h. jeweils eine Speicherkapazität von 0,5 (gegenüber den Hauptbildern dezimierten) Halbbildern besitzen und in dieser zyklischen Reihenfolge fortlaufend überschrieben werden. Für ein Halbbild wird somit jeweils ein Schreibstartsegment I und ein zweites Schreibsegment II benötigt.

Dementsprechend wird in einem ersten Speichervorgang gemäß Fig. 2 a für das erste Halbbild K1 ein aus dem Startschreibsegment X und dem zweiten Schreibsegment Y gebildeter Speicherbereich beschrieben. Das zweite Halbbild K2 wird entsprechend im anschließenden Speichervorgang gemäß Fig. 2 b in das Startschreibsegment Z und das zweite Schreibsegment X eingeschrieben, wobei beim Beschreiben des zweiten Schreibsegments X bereits das Startsegment des ersten Halbbilds K1 überschrieben wird. Beim dritten Speichervorgang wird das Halbbild K3 gemäß Fig. 2 c entsprechend in das Startschreibsegment Y und das zweite Schreibsegment Z eingeschrieben. In dem Zeitpunkt, wo in Fig. 2 c der Schreibzeiger im Startsegment Y in der mit SZ1 bezeichneten Stelle steht, wird somit die zweite Hälfte des ersten Halbbilds K1 überschrieben, d.h. zu diesem Zeitpunkt ist K1 noch teilweise vorhanden, K2 vollständig vorhanden und K3 wird gerade in das Segment Y eingeschrieben.

Für den Auslesevorgang muß sichergestellt werden, daß zum einen ein ganzes Halbbild ausgelesen wird und zum anderen der Lesezeiger den Schreibzeiger nicht überholt. Hierzu muß entschieden werden, ob das aktuell geschriebene Halbbild Kj oder das unmittelbar vorangegangene Halbbild Kj-1 ausgelesen wird. Da der Unterschied in der Schreib- sowie Auslesegeschwindigkeit im wesentlichen durch die Vertikaldezimation VD bestimmt ist, wobei VD eine natürliche Zahl ist, kann die Entscheidung, welches Halbbild ausgelesen werden soll, jeweils von VD sowie von der Stellung des Schreibzeigers im aktuell geschriebenen Halbbild abhängig gemacht werden. Diese Stellung des Schreibzeigers hängt im allgemeinen von der Position des Kleinbilds im Hauptbild und somit vorrangig von der Phasenlage des Kleinbilds und Hauptbilds ab, wobei der Lesezeiger im allgemeinen fest mit dem Hauptbild über die Einblendposition verkoppelt ist.

Bei einer Vertikaldezimation von VD=2 ist die Auslesegeschwindigkeit etwa doppelt so groß ist wie die Schreibgeschwindigkeit, sodaß der Lesezeiger im aktuell geschriebenen Halbbild den Schreibzeiger überholen würde, wenn der Schreibzeiger erst weniger als die Hälfte des Halbbilds geschrieben hat, d.h. noch im Startsegment steht, wie es in der Stellung SZ1 in Fig. 2 c beim Schreiben des Halbbilds K3 der Fall ist. Somit muß in diesem Fall das vorangegangene Halbbild K2 ausgelesen werden, d.h. das Lesestartsegment ist das Schreibstartsegment I des vorherigen Halbbilds, dh. nach Fig. 2 b das Segment Z. Bei der Stellung SZ2 in Fig. 2 c, bei der der Schreibzeiger bereits im zweiten Schreibsegment Z steht, kann hingegen das Schreibstartsegment Y als Lesestartsegment genommen werden. Allgemein läßt sich aus diesen Überlegungen herleiten, daß 2*VD-1 Segmente mit jeweils einer Speicherkapazität, die dem Quotienten aus der für ein Einfügebild benötigten Speicherkapazität und VD entspricht, notwendig sind, um jeweils sicherzustellen, daß entweder das aktuell geschriebene oder das unmittelbar vorangegangene Einfügebild ausgelesen werden kann. Der insgesamt benötigte Speicherraum beträgt somit das (2-1/VD) - fache der für ein Einfügebild benötigten Speicherkapazität. Die Ersparnis gegenüber einer Verwendung von zwei Speicherbereichen für je ein Einfügebild fällt also mit steigender Vertikaldezimation VD. Da der Quotient von Lesegeschwindigkeit und Schreibgeschwindigkeit in guter Näherung als VD angesetzt werden kann, ist das entscheidende Kriterium für die Auswahl des Lesestartsegments, ob das letzte für das Einschreiben des aktuellen Einfügebilds benötigte Segment bereits beschrieben wird.

Bei einer 1/9- Bild-in-Bild-Einblendung ist VD=3 und sind gemäß Fig. 3 entsprechend 2*VD-1= 5 Segmente A,B,C,D und E zu wählen, die jeweils 1/3- Speicherkapazität eines Halbbilds besitzen, sodaß insgesamt eine Speicherkapazität von 5/3 Halbbildern benötigt wird. Auch in diesem Fall werden Speichersegmente I, II, III zyklisch überschrieben, sodaß das erste Halbbild in die Segmente A, B und C geschrieben wird, das zweite Halbbild in die Segmente D, E und A usw. Da die Lesegeschwindigkeit etwa dreimal höher ist als die Schreibgeschwindigkeit, ist als Entscheidungskriterium hier anzusetzen, ob noch mehr als 1/VD = 1/3 des für ein Halbbilds benötigten Speicherraums zu beschreiben sind. Somit ergibt sich auch in diesem Fall als Entscheidungskriterium, ob bereits das letzte für das aktuelle Halbbild benötigte Segment - in diesem Fall das dritte Segment III - beschrieben wird.

Neben der Beseitigung der Naht können weiterhin Störungen beseitigt werden, die durch unterschiedliche Halbbildlagen im Einfügekanal 8 und Hauptkanal 7 entstehen können, z.B. bei einem aus zeilenversetzten Halbbildern zusammengesetzten Bild Störungen zwischen dem oberen Halbbild im Hauptkanal 7 und dem unteren Halbbild im Einfügekanal 8. Dies kann z.B. durch die Speicherung einer zusätzlichen Zeile gewährleistet werden, sodaß die Zeilen des oberen Halbbilds des Einfügekanals trotz der Abhängigkeit von der Rasterlage des Halbbilds des Hauptkanals immer relativ oberhalb der Zeilen des unteren Halbbilds des Einfügekanals dargestellt werden.

## Patentansprüche

1. Verfahren zur Bild-in-Bild-Einblendung,
wobei eine Folge von unter Vertikaldezimation dezimierten Einfügebildern (Kj=K1, K2,...) in eine Speichereinrichtung (S) eingelesen und anschließend ausgelesen wird,
wobei die ausgelesenen Einfügebilder (Kj) in eine Folge von Hauptbildern (Hi=H1, H2,...) eingeblendet werden,
wobei die Speichereinrichtung (S) eine Speicherkapazität von weniger als zwei Einfügebildern (Kj) aufweist und in Speichersegmente (X,Y,Z;A,B,C,D,E) unterteilt ist, welche fortlaufend mit den Einfügebildern überschrieben werden, und
wobei entschieden wird, ob das aktuell geschriebene Einfügebild (Kj) oder das unmittelbar vorangegangene Einfügebild (Kj-1) ausgelesen wird,
**dadurch gekennzeichnet,**
**daß** mehr als ein Speichersegement (X, Y, Z; A, B, C, D, E) der Speichereinrichtung (S) zur Speicherung eines Einfügebilds (Kj) benötigt wird, und
**daß** die Speichersegmente (X,Y,Z;A,B,C,D,E) der Speichereinrichtung (S) in vorgegebener Reihenfolge zyklisch mit den Einfügebildern (Kj) überschrieben werden.

2. Verfahren nach Anspruch 1,
**dadurch gekennzeichnet,**
**daß** die Speichersegmente (X,Y,Z;A,B,C,D,E) gleich groß sind.

3. Verfahren nach Anspruch 1 oder 2,
**dadurch gekennzeichnet,**
**daß** in Abhängigkeit von dem Verhältnis einer Lesegeschwindigkeit eines Lesezeigers zu einer Schreibgeschwindigkeit eines Schreibzeigers sowie einer relativen Position des Schreibzeigers in einem das aktuell geschriebene Einfügebild aufnehmenden Schreibbereich (I,II; I,II,III) entschieden wird, ob das aktuell geschriebene Einfügebild (Kj) oder das unmittelbar vorangegangene Einfügebild (Kj-1) ausgelesen wird.

4. Verfahren nach einem der vorherigen Ansprüche,
**dadurch gekennzeichnet,**
**daß** die Speichereinrichtung eine Speicherkapazität aufweist, die das (2-1/VD) -fache der für ein Einfügebild benötigten Speicherkapazität beträgt, wobei VD die Vertikaldezimation des Einfügebilds ist.

5. Verfahren nach Anspruch 4,
**dadurch gekennzeichnet,**
**daß** die Speichersegmente gleich groß sind und die Anzahl der Speichersegmente 2* VD -1 beträgt, wobei die für ein Einfügebild benötigte Anzahl von Speichersegmenten der Vertikaldezimation entspricht.

6. Verfahren nach Anspruch 5,
**dadurch gekennzeichnet,**
**daß** ein Speichersegment eine Speicherkapazität vom 1/VD - fachen der für ein Einfügebild benötigten Speicherkapazität besitzt und als Entscheidungskriterium angesetzt wird, ob bereits das letzte für das aktuell geschriebene Einfügebild benötigte Speichersegment (II; III) beschrieben wird.

7. Verfahren nach einem der vorherigen Ansprüche,
**dadurch gekennzeichnet,**
**daß** die Einfügebilder (Kj) und Hauptbilder (Hi) Halbbilder eines Monitorbildes sind.

8. Verfahren nach einem der vorigen Ansprüche,
**dadurch gekennzeichent,**
daß verglichen wird, ob ein Hauptbild (Hi) und ein in dieses einzublendendes Einfügebild (Ki) eine gleiche Halbbildlage aufweisen, und in dem Fall einer abweichenden Halbbildlage durch eine Adreßverschiebung des Hauptbilds (Hi) oder des Einfügebilds eine gleiche Halbbildlage erreicht wird.

9. Schaltungsanordnung zur Bild-in-Bild-Einblendung, insbesondere zum Durchführen eines Verfahrens nach einem der Ansprüche 1 bis 8,
mit einer Speichereinrichtung (S) zum Speichern von vertikal dezimierten Einfügebildern (Kj=K1, K2,...), wobei die Speichereinrichtung (S) eine Speicherkapazität von weniger als zwei Einfügebildern (Kj) aufweist und in Speichersegmente (X, Y, Z;A, B, C, D, E) unterteilt ist, welche fortlaufend mit den Einfügebildern (Kj) überschreibbar sind,
mit einer Steuereinrichtung. (3) zum Auslesen der vertikal dezimierten Einfügebilder aus der Speichereinrichtung (S) und zum Einblenden der ausgelesenen Einfügebilder (Kj) in eine Folge von Hauptbildern (Hi=H1, H2,...), und
mit einer Entscheidungseinrichtung zum Entscheiden, ob das aktuell geschriebene Einfügebild (Kj) oder das unmittelbar vorangegangene Einfügebild (Kj-1) ausgelesen wird,
**dadurch gekennzeichnet,**
**daß** jedes Speichersegment (X,Y,Z;A,B,C,D,E) eine Speicherkapazität von weniger als ein Einfügebild (Kj) aufweist, und
**daß** die Speichersegmente (X,Y,Z;A,B,C,D,E) der Speichereinrichtung (S) in vorgegebener Reihenfolge zyklisch mit den Einfügebildern (Kj) überschreibbar sind.

10. Schaltungsanordnung nach Anspruch 9,
**dadurch gekennzeichnet,**
**daß** die Speichersegmente(X,Y,Z;A,B,C,D,E) gleich groß sind.

11. Schaltungsanordnung nach Anspruch 9 oder 10,
**dadurch gekennzeichnet,**
**daß** die Speichereinrichtung eine Speicherkapazität aufweist, die das (2-1/VD) -fache der für ein Einfügebild benötigten Speicherkapazität beträgt, wobei VD die Vertikaldezimation des Einfügebilds ist.

12. Schaltungsanordnung nach Anspruch 11,
**dadurch gekennzeichnet,**
**daß** die Speichersegmente gleich groß sind und die Anzahl der Speichersegmente 2* VD -1 beträgt, wobei die für ein Einfügebild benötigte Anzahl von Speichersegmenten der Vertikaldezimation entspricht.

13. Schaltungsanordnung nach einem der Ansprüche 9 bis 12,
**dadurch gekennzeichnet,**
**daß** die Entscheidungseinrichtung in Abhängigkeit von dem Verhältnis einer Lesegeschwindigkeit eines Lesezeigers zu einer Schreibgeschwindigkeit eines Schreibzeigers sowie einer relativen Position des Schreibzeigers in einem das aktuell geschriebene Einfügebild aufnehmenden Schreibbereich entscheidet, ob das aktuell geschriebene Einfügebild (Kj) oder das unmittelbar vorangegangene Einfügebild (Kj-1) ausgelesen wird.

## Claims

1. A method for picture-in-picture overlay,
whereby a sequence of insert images (Kj=K1, K2, ...) decimated by vertical decimation is read into a memory device (S) and then is read out,
whereby the read-out insert images (Kj) are overlaid into a sequence of main images (Hi=H1, H2, ...),
whereby the memory device (S) has a memory capacity of less than two insert images (Kj) and is divided into memory segments (X, Y, Z; A, B, C, D, E), which are continuously overwritten with the insert images, and
whereby it is decided whether the currently written insert image (Kj) or the directly preceding insert image (Kj-1) is read out,
**characterised in that** more than one memory segment (X, Y, Z; A, B, C, D, E) of the memory device (S) is required for the storage of an insert image (Kj),
and **in that** the memory segments (X, Y, Z; A, B, C, D, E) of the memory device (S) are cyclically overwritten with the insert images (Kj) in a predetermined sequence.

2. A method according to Claim 1,
**characterised in that** the memory segments (X, Y, Z; A, B, C, D, E) are of the same size.

3. A method according to Claim 1 or 2,
**characterised in that** in dependence on the ratio of a reading speed of a reading cursor to a writing speed of a writing cursor and also on a relative position of the writing cursor in a writing area (I, II; I, II, III) recording the currently written insert image a decision is made as to whether currently written the insert image (Ku) or the directly preceding insert image (Kj-1) is read out.

4. A method according to one of the preceding Claims,
**characterised in that** the memory device has a memory capacity which is (2-1/VD) times the memory capacity required for an insert image, in which VD is the vertical decimation of the insert image.

5. A method according to Claim 4,
**characterised in that** the memory segments are of equal size and the number of the memory segments is 2* VD -1, in which the number of memory segments required for an insert image corresponds to the vertical decimation.

6. A method according to Claim 5,
**characterised in that** a memory segment has a memory capacity of 1/VD times the memory capacity required for an insert image and is applied as a decision criterion as to whether the last memory segment (II; III) required for the currently written insert image is already described.

7. A method according to one of the preceding Claims,
**characterised in that** the insert images (Kj) and main images (Hi) are fields of a monitor picture.

8. A method according to one of the preceding Claims,
**characterised in that** a comparison is made as to whether a main image (Hi) and an insert image (Ki) to be overlaid in it have the same field position, and in the case of a different field position the same field position is achieved by an address displacement of the main image (Hi) or of the insert image.

9. A circuit arrangement for picture-in-picture overlay, in particular for performing a method according to one of Claims 1 to 8,
having a memory device (S) for storing vertically decimated insert images (Kj=K1, K2, ...), in which the memory device (S) has a memory capacity of less than two insert images (Kj) and is divided into memory segments (X, Y, Z; A, B, C, D, E), which can be continuously overwritten with the insert images (Kj),
having a control device (3) for reading out the vertically decimated insert images from the memory device (S) and for overlaying the read-out insert images (Kj) into a sequence of main images (Hi=H1, H2, ...), and
having a decision device for deciding whether the currently written insert image (kj) or the directly preceding insert image (Kj-1) is read out,
**characterised in that** each memory segment (X, Y, Z; A, B, C, D, E) has a memory capacity of less than one insert image (Kj),
**and in that** the memory segments (X, Y, Z; A, B, C, D, E) of the memory device (S) can be cyclically overwritten with the inserted images (Kj) in a predetermined sequence.

10. A circuit arrangement according to Claim 9,
**characterised in that** the storage segments (X, Y, Z; A, B, C, D, E) are of equal size.

11. A circuit arrangement according to Claim 9 or 10,
**characterised in that** the memory device has a memory capacity which is (2-1/VD) times the memory capacity required for an insert image, in which VD is the vertical decimation of the insert image.

12. A circuit arrangement according to Claim 11,
**characterised in that** the storage segments are of equal size and the number of storage segments is 2* VD -1, with the number of storage segments required for an insert image corresponding to the vertical decimation.

13. A circuit arrangement according to one of Claims 9 to 12,
**characterised in that** the decision device decides in dependence on the ratio of a reading speed of a reading cursor to a writing speed of a writing cursor and also on a relative position of the writing cursor in a writing area receiving the currently written insert image whether the currently written insert image (Kj) or the directly preceding insert image (Kj-1) is read out.

## Revendications

1. Procédé d'incrustation d'images selon lequel on enregistre une suite d'images d'incrustation (Kj = K1, K2...) décimées par décimation verticale dans une mémoire (S) et ensuite on les lit,
les images d'incrustation, (Kj), lues, étant incrustées suivant une suite d'images principales (Hi = H1, H2, etc.),
l'installation de mémoire (S) ayant une capacité de mémoire inférieure à deux images d'incrustation (Kj) et étant subdivisée en segments de mémoire (X, Y, Z ; A, B, C, D, E) qui sont surscrits en continu par les images d'incrustation et selon lequel on décide si l'image d'incrustation (Kj) inscrite actuellement ou si l'image d'incrustation directement précédente (Kj-1) doit être lue,
**caractérisé en ce qu'**
il faut plus d'un segment de mémoire (X, Y, Z ; A, B, C, D, E) de la mémoire (S) pour enregistrer une image d'incrustation (Kj), et
les segments de mémoire (X, Y, Z ; A, B, C, D, E) de la mémoire (S) sont surscrits dans l'ordre prédéterminé, cycliquement, par les images d'incrustation (Kj).

2. Procédé d'incrustation d'images selon la revendication 1,
**caractérisé en ce que**
les segments de mémoire (X, Y, Z; A, B, C, D, E) sont de même dimension.

3. Procédé d'incrustation d'images selon la revendication 1 ou 2,
**caractérisé en ce qu'**
en fonction du rapport d'une vitesse de lecture d'un index de lecture par rapport à la vitesse d'écriture d'un index d'écriture et d'une position relative de l'index d'écriture dans une zone d'écriture (I, II ; I, II, III) recevant l'image d'incrustation écrite actuellement, on décide s'il faut lire l'image d'incrustation (Kj) inscrite actuellement ou l'image d'incrustation (Kj-1) inscrite précédemment.

4. Procédé d'incrustation d'images selon l'une des revendications précédentes,
**caractérisé en ce que**
l'installation de mémoire a une capacité de mémoire égale à (2-1/VD) fois la capacité de mémoire nécessaire à une image d'incrustation, (VD) étant la décimation verticale de l'image d'incrustation.

5. Procédé d'incrustation d'images selon la revendication 4,
**caractérisé en ce que**
les segments de mémoire sont de même dimension et le nombre de segments de mémoire est égal à (2*VD-1), le nombre de segments de mémoire nécessaires à l'image d'incrustation correspondant à la décimation verticale.

6. Procédé d'incrustation d'images selon la revendication 5,
**caractérisé en ce qu'**
un segment de mémoire a une capacité de mémoire égale à un multiple de (1/VD) fois la capacité de mémoire nécessaire à une image d'incrustation et comme critère de décision on suppose que le dernier segment de mémoire (II, III) nécessaire à l'image d'incrustation enregistrée actuellement est inscrit.

7. Procédé selon l'une des revendications précédentes,
**caractérisé en ce que**
les images d'incrustation (Kj) et les images principales (Hi) sont les demi-images d'une image d'écran de contrôle.

8. Procédé selon l'une des revendications précédentes,
**caractérisé en ce qu'**
on compare si une image principale (Hi) et une image d'incrustation (Ki) que l'on veut incruster dans celle-ci, ont une même position de demi-image et, dans le cas d'une position de demi-image différente, par un décalage d'adresse de l'image principale (Hi) ou de l'image d'incrustation, on réalise la même position de demi-image.

9. Circuit d'incrustation d'images notamment pour la mise en oeuvre d'un procédé selon l'une des revendications 1 à 8, comprenant
- une mémoire (S) pour enregistrer des images d'incrustation (Kj = K1, K2 ...) décimées verticalement,
- la mémoire (S) ayant une capacité de mémoire inférieure à celle de deux images d'incrustation (Kj) et cette mémoire étant subdivisée en segments de mémoire (X, Y, Z ; A, B, C, D, E) qui sont surscrits en continu par les images d'incrustation (Kj),
- une installation de commande (3) pour lire les images d'incrustation à décimation verticale de la mémoire (S) et pour incruster les images d'incrustation lues (Kj) dans une succession d'images principales (Hi = H1, H2 ...), ainsi qu'
- une installation de décision pour décider s'il faut lire l'image d'incrustation (Kj) lue actuellement ou l'image d'incrustation (Kj-1) directement précédente,
**caractérisé en ce que**
chaque segment de mémoire (X, Y, Z ; A, B, C, D, E) a une capacité de mémoire inférieure à celle d'une image d'incrustation (Kj) et les segments de mémoire (X, Y, Z ; A, B, C, D, E) de l'installation de mémoire (S) sont surscrits cycliquement par les images d'incrustation (Kj) selon un ordre prédéterminé.

10. Circuit d'incrustation d'images selon la revendication 9,
**caractérisé en ce que**
les segments de mémoire (X, Y, Z ; A, B, C, D, E) sont de même dimension.

11. Circuit d'incrustation d'images selon les revendications 9 ou 10,
**caractérisé en ce que**
l'installation de mémoire a une capacité de mémoire égale à (2-1/VD) fois la capacité de mémoire nécessaire à une image d'incrustation, (VD) étant la décimation verticale de l'image d'incrustation.

12. Circuit d'incrustation d'images selon la revendication 11,
**caractérisé en ce que**
les segments de mémoire sont de même dimension et le nombre des segments de mémoire est égal à (2*VD-1), le nombre de segments de mémoire nécessaires à une image d'incrustation correspondant à la décimation verticale.

13. Circuit d'incrustation d'images selon l'une des revendications 9 à 12,
**caractérisé en ce que**
l'installation de décision, en fonction du rapport de la vitesse de lecture d'un index de lecture et de la vitesse d'écriture d'un index d'écriture, ainsi qu'en fonction d'une position relative de l'index d'écriture dans une plage d'écriture recevant l'image d'incrustation à enregistrer actuellement, décide si l'image d'incrustation (Kj) enregistrée actuellement ou si l'image d'incrustation (kj-1) directement précédente doit être lue.
